# EUROPÄISCHE PATENTSCHRIFT

(11) **EP 0 758 083 B1**
(45) Veröffentlichungstag und Bekanntmachung des Hinweises auf die Patenterteilung: **06.08.2003**
(21) Anmeldenummer: 96110124.3
(22) Anmeldetag: 22.06.1996
(51) Int. Cl.: G01N 21/55, G01N 21/59, G01N 21/47

(54) **Vorrichtung zur spektralen Remissions- und Transmissionsmessung**
Device for spectral remission and transmission measurement
Dispositif de mesure de rémission et de transmission spectrale

(30) Priorität: 05.08.1995 DE 19528855
(43) Veröffentlichungstag der Anmeldung: 12.02.1997
(73) Patentinhaber: Applied Films GmbH & Co. KG, 63755 Alzenau (DE)
(72) Erfinder: Kappel, Peter, 63694 Limeshain (DE); Lenz, Werner, 63505 Langenselbold (DE); Müller, Walter, 36396 Steinau/Ulmbach (DE); Schäfer, Christian, Dr., 63571 Gelnhausen (DE); Schebesta, Wilhelm, 07747 Jena (DE); Basler, Ulrich, 07745 Jena (DE); Mondry, Jens, 07747 Jena (DE); Gobel, Jürgen, 07743 Jena (DE)
(74) Vertreter: Schickedanz, Willi, Dr. Dipl.-Ing.

(56) Entgegenhaltungen:
- EP-A- 0 491 276
- DE-A- 4 120 749
- DE-U- 29 512 646
- US-A- 4 487 504
- US-A- 4 881 811
- US-A- 4 932 779
- SOLAR ENERGY MATERIALS, Bd. 14, 1986, Seiten 447-459, XP002031654 MASTERSON K ET AL: "AN INTEGRATING SPHERE SPECTROMETER FOR HIGH-TEMPERATURE MATERIALS CHARACTERIZATION"
- OPTICAL ENGINEERING, Bd. 25, Nr. 4, 1986, Seiten 566-571, XP002031655 VANDERBILT V UND GRANT L: "POLARIZATION PHOTOMETER TO MEASURE BIDIRECTIONAL REFLECTANCE FACTOR R OF LEAVES"
- OPTIK, Bd. 49, Nr. 4, 1978, Seiten 453-463, XP002031656 KROCHMANN J: "ÜBER DIE MESSUNG DES REFLEXIONSGRADES BEI DIFFUSEM LICHTEINFALL"
- APPLIED OPTICS, Bd. 23, Nr. 23, 1984, Seiten 4218-4225, XP002031657 BRUNSTING A ET AL: "SMALL AREA MEASUREMENTS OF DIFFUSE REFLECTANCE FROM 410 TO700 NM"

## Beschreibung

Die Erfindung betrifft eine Vorrichtung zur Messung optischer Eigenschaften transparent-reflektierender Objekte gemäß Anspruch 1.

Bei der Herstellung und/oder Qualitätskontrolle optischer Erzeugnisse ist es häufig erforderlich, die optischen Eigenschaften, wie z.B. das Reflexions- und Transmissionsverhalten, in Abhängigkeit von der Lichtwellenlänge zu messen und grafisch darzustellen bzw. die optischen Meßgrößen in weiteren Rechen- und Auswerteverfahren zu verarbeiten. Ein Beispiel hierfür sind die optische Analyse der als Infrarotfilter wirkenden Filterschichten, die Wärmestrahlung zurückhalten, jedoch sichtbares Licht möglichst ungehindert durchlassen sollen. Derartige Filterschichten finden bevorzugt Anwendung in der Beschichtung von Architekturglas oder zur Beschichtung von Fahrzeugscheiben. Ein weiteres Beispiel sind Entspiegelungsschichten, insbesondere für die Breitbandentspiegelung, die innerhalb des Bereichs des sichtbaren Lichtes eine möglichst geringe Reflexion aufweisen sollen. Sowohl während des Herstellungsprozesses der Schichten als auch bei der Endkontrolle der optischen Schichteigenschaften ist eine Messung deren spektraler Abhängigkeiten erforderlich.

Zur Charakterisierung des spektralen Reflexions- bzw. Transmissionsvermögens optischer, insbesondere der in einem Dünnschichtprozeß hergestellten Schichtsubstanzen ist es üblich, deren Reflexionsund/Oder Transmissionspektrum über den interessierenden Wellenlängenbereich intensitätsmäßig als sogenannte Strahlungsfunktion zu erfassen. Auf der Basis derartiger Strahlungsfunktionen werden Farbwerte der beschichteten Substrate bestimmt, die charakteristisch für die optischen Eigenschaften der Substrate selbst sind. Der Erfindung liegt daher die Aufgabe zugrunde, eine verbesserte Vorrichtung zur spektralen Remissions- und Transmissionsmessung bereitzustellen. Gelöst wird diese Aufgabe durch eine Vorrichtung gemäß den Merkmalen von Anspruch 1.

Zur Ausschaltung von Fremdlichteinflüssen bei Messung der apparativen Spektralfunktion Φ_{ki,i-1,2,3}(λ) ist die Austrittsöffnung 27 vorzugsweise orthogonal zur Öffnung 24 und zur Lampe 4 in der Fotometerkugel 6b angeordnet. Hierdurch wird vermieden, daß durch die Öffnung 24 in die Fotometerkugel 6b einstrahlendes Licht direkt in die Austrittsöffnung 27 gelangt und bewirkt, daß das von der Lampe 4 abgestrahlte Licht erst nach mehrfacher Reflexion innerhalb der Fotometerkugel 6b die Austrittsöffnung 27 als diffus gestreute Lichtverteilung verläßt.

Als Beleuchtungsquelle wird eine Fotometerkugel (Ulbrichtsche Kugel) verwendet, deren Inneres von einer Lichtquelle beleuchtet wird. Dabei ist gemäß Anspruch 4 als Leuchtquelle eine Halogenlampe oder die Lichtaustrittsöffnung eines in die Fotometerkugel ragenden beleuchteten Lichtleiters vorgesehen. Dies hat den Vorteil, daß die thermische Belastung der Fotometerkugel durch eine Wärme abgebende Lichtquelle vermieden wird und damit ein thermischer, das Emissionsspektrum der Leuchtquelle negativ beeinflussender Effekt nicht auftritt.

Die als Leuchtquelle verwendete Fotometerkugel weist zur Detektion der Strahlungsfunktion Φ_{ki,i=1,2,3}(λ) eine im wesentlichen senkrecht zur Lichtaustrittsöffnung bzw. Lichteinfallrichtung zweite Lichtaustrittsöffnung auf, durch die ausschließlich das charakteristische Emissionsspektrum der Beleuchtungsquelle detektiert wird. Bei einer zur Auflichtmessung verwendeten Fotometerkugel weist diese eine weitere, der ersten Lichtaustrittsöffnung diametral gegenüber liegende weitere Lichtaustrittsöffnung auf, durch welche der von der Probe in die Fotometerkugel reflektierte Anteil des Lichtes vorzugweise über eine optische Abbildungsoptik auf den Eintrittsbereich eines Lichtleiters fokussiert wird, der andernends mit dem Eintrittsspalt einer spektralauflösenden lichtdispersiven und nachgeschalteten lichtsensitiven Fotoempfängereinrichtung zur Detektion des wellenlängenabhängigen Intensitätsspektrums gekoppelt ist.

Im Unterschied zu dem bei der Auflichtmessung verwendeten Fotometerkugeltyp ist bei der Transmissionsmessung die Beleuchtungsquelle und die, das transmittierte Licht auffangende Optikanordnung auf entgegengesetzten Seiten der Proben angeordnet. Das Licht gelangt dabei durch die Probe hindurch z.B. auf eine Sammeloptik, die an dem Lichteintrittsende eines Lichtleiters angekoppelt ist, mit welchem das Licht auf den Eintrittsspalt einer lichtdispersiven Einrichtung, vorzugsweise eines Monochromators, z.B. eines Gittermonochromators, gelenkt wird.

Um die auf der Probe, auf einer Referenzfläche bzw. vom Strahlungshintergrund gemessenen Strahlungsfunktionen Φ_{P}, Φ_{R}, Φ_{S} einerseits und die Strahlungsfunktionen der Lichtquelle Φ_{K} (λ) andererseits jeweils ohne gegenseitige Beeinflussung im Bereich der Eintrittsöffnung des Spektrometers, insbesondere ohne Signalüberlagerung, messen zu können, sind in die beiden Strahlengänge jeweils einzelne Lichtblenden eingesetzt, die wechselseitig, unabhängig voneinander, geöffnet bzw. geschlossen werden können. Die Verwendung von Lichtleitern hat zudem den Vorteil, daß die Meßvorrichtung mit der lichtanalysierenden und detektierenden Vorrichtung flexibel verbunden ist und daß somit die Meßvorrichung frei über dem zu untersuchenden Probenflächenbereich verfahrbar und positionierbar ist. Die Verwendung flexibler Lichtleiter hat zudem den Vorteil, daß mehrere Fotometerkugelmeßvorrichtungen vorgesehen werden können, die unabhängig voneinander an verschiedenen Meßpositionen angeordnet sind. Die von diesen einzelnen Meßstationen abgegebenen Lichtsignale werden mit einer Blendenmultipliervorrichtung voneinander trennbar sukzessive der lichtdispersiven Vorrichtung 14 zugeleitet und analysiert und detektiert.

Weitere vorteilhafte Ausbildungen sind in den Unteransprüchen angegeben.

Die Erfindung wird nachfolgend anhand zweier, besonders vorteilhafte Ausführungsbeispiele darstellende, Figuren beschrieben. Es zeigen:
- Figur 1: eine schematische Darstellung einer Meßvorrichtung zur Durchführung von Transmissionsmessungen und
- Figur 2: eine schematische Darstellung einer Meßanordnung zur Durchführung von Auflichtmesssungen.

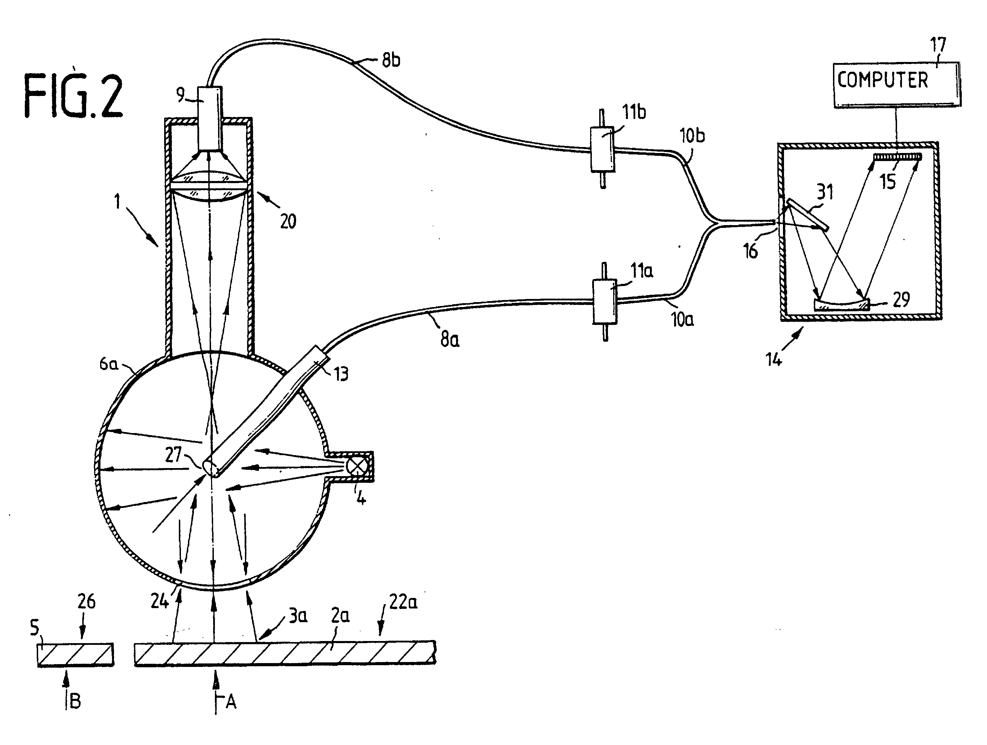

Die Meßeinrichtung zur Durchführung von Auflichtmessungen ist dargestellt in Figur 2. Die Oberfläche 22a des zu untersuchenden Probenkörpers 2a wird mit dem aus einer Öffnung 24 einer Fotometerkugel 6a austretenden Licht bestrahlt, wobei die Fotometerkugel 6a als Ulbrichtsche Kugel ausgebildet ist. Als Lichtquelle ist in der Fotometerkugel 6a eine Lampe 4 positioniert. Das von der Lampe 4 abgestrahlte Licht wird an den Innenwandungen der Fotometerkugel 6a diffus mehrfach gestreut und fällt auf den zu untersuchenden Bereich 3a der Oberfläche 22a im wesentlichen senkrecht auf. Das von der Probenfläche 3a,22a in die Fotometerkugel diffus und/oder regulär zurückreflektierte Licht wird mittels einer, der Öffnung 24 diametral gegenüber und innerhalb des Fotometerkugelkörpers 6a angeordneten Linsenoptik 20 auf das Einkoppelstück 9 fokussiert. Auf der der Linsenanordnung 20 abgewandten Seite des Einkoppelstücks 9 setzt sich dieses in einem flexiblen Lichtleiterstrang 8b und 10b fort, wobei zwischen den Lichtleitern 8b und 10b eine verschließbare Blende 11b angeordnet ist. Das bei geöffneter Blende 11b von dem Lichleiter 8b in den Lichtleiter 10b überführte Lichtbündel wird durch den Lichtleiter 10b austrittsseitig auf die Eintrittsöffnung 16 einer spektraldispersiven Vorrichtung, vorzugsweise eines Monochromators 14, gelenkt. Über einen Spiegel 31 wird das eintretende Licht auf ein optisch, vorzugsweise konkav wirkendes Gitter 29 umgelenkt und von diesem räumlich dispersiv aufgespalten auf eine lichtempfindliche Fotoempfängereinrichtung 15 abgebildet. Die Fotoempfängereinrichtung 15 wandelt das auftreffende Licht entsprechen seiner wellenlängenabhängigen Intensitätsverteilung in elektrische Signale um, die zur Speicherung und weiteren Verarbeitung einem Computer 17 zugeführt werden.

Zur Bestimmung der Apparatestrahlungsfunktionen Φₖ(λ) wird die sich innerhalb der Fotometerkugel 6a ausbildende Spektralverteilung des zur Beleuchtung der Schicht 3a verwendeten Lichts aus dem Inneren der Fotometerkugel 6a über ein in eine öffnung 27 der Fotometerkugel 6 eingesetztes Auskoppelstück 13 in den Lichtleiter 8a und weiter über den Lichtleiter 10a auf die Eintrittsöffnung 16 der lichtdispersiven Vorrichtung 14 gelenkt. Die Lichtleiter 8a und 10a sind analog den Lichtleitern 8b und 10b durch eine wahlweise zu verschließende Blende 11a lichtdicht voneinander trennbar. Zur Aufnahme der apparativen Spektralfunktionen Φ_{ki,i=1,2,3}(λ) wird das über die Lichtleiter 8a und 10a der lichtdispersiven Vorrichtung 14 zugeführte Licht spektral zerlegt, mit der Fotoempfängereinrichtung 15 detektiert und in Abhängigkeit von seiner spektralen Intensität als wellenlängenabhängige elektrische Signale dem Computer 17 zur Speicherung und weiteren Verarbeitung zugeführt. Als Fotoempfängereinrichtung 15 ist z.B. ein lichtempfindliches CCD-array oder ein Photomultiplier vorgesehen.

Zur Aufnahme eines Weißstandardspektrums wird vorzugsweise ein aus Keramik bestehender Preßling 5 verwendet, der vorzugsweise aus Bariumsulfat besteht bzw. eine im wesentlichen ein Weißlichtreflexionsspektrum generierende Oberfläche 26 aufweist. Zur Positionierung der Aus- bzw. Einlaßöffnung 24 über der Referenzfläche 26 ist die Fotometerkugel 6a mittels einer in der Figur 2 nicht dargestellten Verfahrvorrichtung parallel zu den zu untersuchenden Flächen 3a,22a,26 verschiebbar. Zur Aufnahme der zur Berechnung der Remissionskurve β(λ) zu bestimmenden Spektralfunktionen Φ_{P}, Φ_{R}, Φ_{S} und Φₖ (λ) wird das über die Lichtleiter 8a, 10a bzw. 8b, 10b geführte Licht mittels der Blenden 11a bzw. 11b wechselweise einzeln der lichtdispersiven Vorrichtung 14 zugeführt. Dabei ist als konstruktive Vereinfachung vorgesehen, die Lichtleiter 10a und 10b als Y-Lichtleiter auszubilden, wobei der gemeinsame Leiterstrang dem Eintrittsspalt 16 der lichtdispersiven Vorrichtung 14 gegenüber positioniert ist.

Als Lampe 4 ist erfindungsgemäß vorgesehen, eine Halogenlampe zu verwenden, die im Dauerlichtbetrieb betrieben wird. Anstelle einer unmittelbar in die Fotometerkugel 6a eingebrachten Lampe 4 ist alternativ vorgesehen, das Innere der Fotometerkugel 6a mittels einer im wesentlichen orthogonal zur Austrittsöffnung 24, dem Auskoppelstück 13 und dem durch die optische Linsenanordnung 20 definierten Strahlengang in einer in der Fotometerkugel vorgesehenen Öffnung 6a hineinragenden und in Figur 2 nicht dargestellten Lichtleiterendteil zu beleuchten. Durch die zu der Austritts- bzw. Eintrittsöffnung 24, dem Auskoppelstück 13 und der optischen Linsenanordnung 20 orthogonalen Ausrichtung der Lampe 4 ist erfindungsgemäß gewährleistet, daß der aus der Austrittsöffnung 24 und der aus dem Auskoppelstück 13 aus der Fotometerkugel 6a austretende Lichtanteil sich in seiner spektralen Intensitätsverteilung nicht voneinander unterscheiden, und daß das aus der Austrittsöffnung 27 ausgekoppelte Licht zur Bestimmung der spektralen Apparatefunktion Φₖ(λ) verwendbar ist.

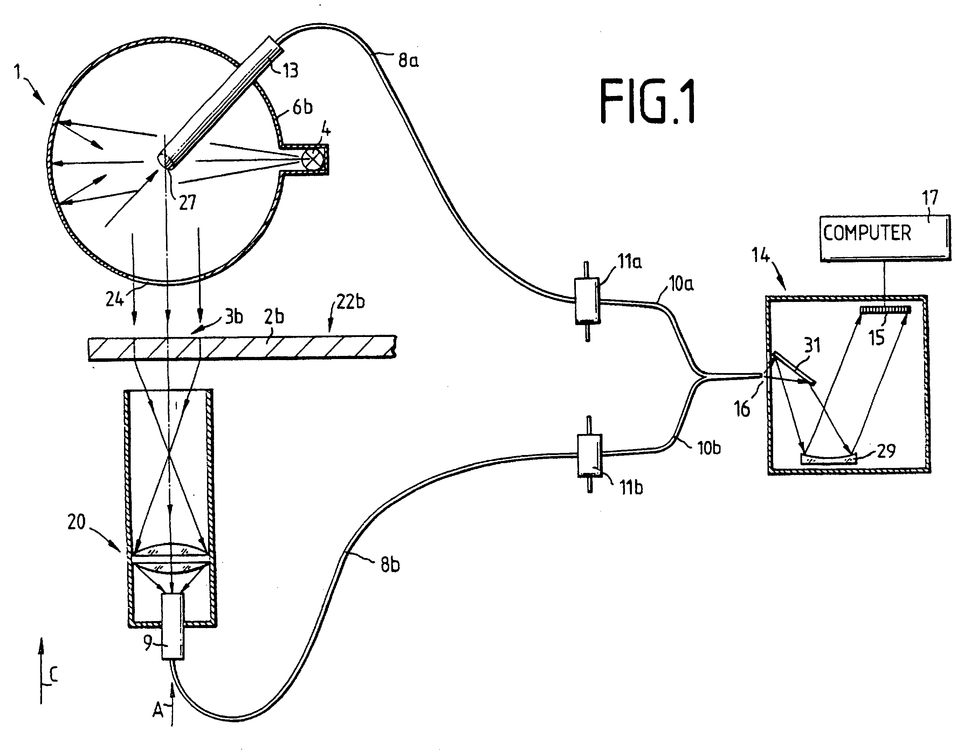

Die in Figur 1 schematisch dargestellte Meßvorrichtung 1 dient zur erfindungsgemäßen Messung der in Transmission eines Meßobjektes 2b zu bestimmenden Remissionsgradkurve β(λ). Dabei befinden sich die Leuchtquelle, die analog wie bei der für Reflexionsmessungen eingesetzten Fotometerkugel 6a in der Fotometerkugel 6b integriert ist, und die Lichtdetektionsoptik 20 auf entgegengesetzten Seiten des Meßobjektes 2b. Das aus der öffnung 24 der Fotometerkugel 6b austretende Licht fällt im wesentlichen senkrecht im Bereich der zu untersuchenden Schicht 3b auf die Meßfläche 22b und wird nach Durchgang durch das Meßobjekt 2b mittels der Abbildungsoptik 20 auf die Eintrittsöffnung eines Auskoppelstücks 9 fokussiert. Mittels Lichtleitern 8b und 10b, welche durch eine den Strahlengang lichtdicht verschließbare Blende 11b voneinander trennbar sind, wird das, das Meßobjekt 2b durchlaufende Licht auf die Eintrittsöffnung 16 einer spektraldispersiven Vorrichtung 14, vorzugsweise eines Gittermonochromators, gelenkt und in seine wellenlängenabhängigen Intensitätsanteile aufgespalten, welche nach Wandlung in elektrische Signalgrößen mittels einer Fotoempfängervorrichtung 15 einem Computer 17 zur Speicherung und zur weiteren Verarbeitung zugeführt werden. Zur Aufnahme der apparativen Spektralfunktionen Φ_{ki,i=1,2,3}(λ) weist die Fotometerkugel 6b eine Öffnung 27 auf, in welche ein Auskoppelstück 13 eingesetzt ist, das das aus der Fotometerkugel 6b in die Öffnung 27 austretende Licht in einen Lichtleiter 8a überführt, welcher andernends an eine verschließbare Blende 11a angekoppelt ist. Bei geöffneter Blende 11a tritt das Licht aus dem Lichtleiter 8a in einen dem Lichleiter 8a endseitig benachbart angeordneten Lichtleiter 10a ein und wird auf die Eintrittsöffnung 16 der spektraldispersiven Vorrichtung 14 gelenkt, um in diesem in sein Spektrum zerlegt und in intensitätsabhängige elektrische Signale umgewandelt zu werden, welche dem Computer 17 zur Speicherung und weiteren technerischen Verarbeitung zugeführt werden.

Die Lichtleiter 10a und 10b sind dabei als sogenannter optischer Verzweiger ausgebildet, der in dem in den Figuren 1 und 2 dargestellten Ausführungsbeispiel als Y-Lichtleiter ausgebildet ist.

## Patentansprüche

1. Einrichtung zur Messung der optischen Eigenschaften transparentreflektierender und/oder reflektierender Objekte in Abhängigkeit von der Lichtwellenlänge, vorzugsweise für die Messung der optischen Eigenschaften mittels eines Vakuumbeschichtungsverfahrens aufgebrachter dünner Schichten (3a), mit
1.1 einer Ulbrichtkugel (6a), in die eine Lichtquelle (4) einstrahlt, wobei die Ulbrichtkugel (6a)
1.2 eine dem Messobjekt (2a, 2b) gegenüberliegende erste Austrittsöffnung (24)
1.3 sowie eine zweite Austrittsöffnung (27) aufweist, wobei die zweite Austrittsöffnung (27) über einen Lichtleiter (8a, 10a) mit einer lichtdispersiven Vorrichtung (14) verbunden ist,
1.4 einem Einkoppelstück (9), das Strahlungen aus der Ulbrichtkugel (6a) einfängt und über einen Lichtleiter (8b, 10b) an die lichtdispersive Vorrichtung (14) weiterleitet;
1.5 einer Fotoempfangseinrichtung (15) in der lichtdispersiven Vorrichtung (14), die mit einer Auswerteeinheit (17) verbunden ist, welche die optischen Eigenschaften des Messobjekts ermittelt und abspeichert,
**dadurch gekennzeichnet, dass** die zweite Austrittsöffnung (27) in das Innere der Ulbrichtkugel (6a) hineinragt und dass die Lichtquelle (4) zu der ersten Austrittsöffnung (24) und zu der zweiten Austrittsöffnung (27) orthogonal ausgerichtet ist.

2. Einrichtung nach Anspruch 1, **dadurch gekennzeichnet, dass** in den Lichtleitern (8a, 10a; 8b, 10b) jeweils eine Blende (11a, 11b) vorgesehen ist, mit der die Strahlengänge in den Lichtleitern (8a, 10a; 8b, 10b) einzeln und unabhängig voneinander unterbrechbar sind, wodurch die wellenlängenabhängigen Intensitätsspektren des von der Substratfläche (3a, 22a, 26a) reflektierten Lichts und des von der Lichtquelle (4, 6a) emittierten charakteristischen Emissionsspektrums einzeln und getrennt voneinander messbar sind.

3. Einrichtung nach Anspruch 1, **dadurch gekennzeichnet, dass** das von einer Messfläche (3a, 22a, 26) des Messobjekts (2a, 2b) in die Ulbrichtkugel (6a) reflektierte Licht mittels einer der Austrittsöffnung (24) diametral gegenüber angeordneten Abbildungsoptik (20) auf die Eintrittsspalte (16) der lichtdispersiven Vorrichtung (14) gelenkt ist, und dass die Ulbrichtkugel (6a) mindestens eine weitere Öffnung (27) aufweist, durch welche ein Teil der im Innern der Ulbrichtkugel (6a) erzeugten Lichtstrahlung zur Bestimmung der apparativen Strahlungsfunktion Φ_{ki, i = 1, 2, 3}(λ) auf den Eintrittsspalt (16) der lichtdispersiven Vorrichtung (14) gelenkt wird.

4. Einrichtung nach Anspruch 1, **dadurch gekennzeichnet, dass** als Lampe (4) eine Halogenlampe vorgesehen ist, die vorzugsweise im Dauerlichtzustand betrieben wird.

5. Einrichtung nach Anspruch 1, **dadurch gekennzeichnet, dass** als Referenzfläche (26) ein Weißstandard, vorzugsweise ein Pressling aus Bariumsulfat oder Magnesiumoxid oder ein aus keramischem Material gefertigter Flächenkörper (26) vorgesehen ist.

## Claims

1. Device for measuring the optical properties of transparent-reflective and/or reflective objects as a function of the light wavelength, preferably for measuring the optical properties of thin layers (3a) applied by a vacuum coating method, comprising
1.1 an Ulbricht sphere (6a), into which a light source (4) beams, the Ulbricht sphere (6a) having
1.2 a first discharge aperture (24) opposing the object of measurement (2a, 2b)
1.3 and a second discharge aperture (27), the second discharge aperture (27) being connected to a light-dispersive apparatus (14) via an optical conductor (8a, 10a),
1.4 a coupling piece (9) which captures the radiation from the Ulbricht sphere (6a) and transmits it via an optical conductor (9b, 10b) to the light-dispersive apparatus (14);
1.5 a photo receiving device (15) in the light-dispersive apparatus (14), the photo receiving device (15) being connected to an evaluation unit (17) which detects and stores the optical properties of the object of measurement,
**characterised in that** the second discharge aperture (27) projects into the interior of the Ulbricht sphere (6a) and **in that** the light source (4) is directed orthogonally to the first discharge aperture (24) and the second discharge aperture (27).

2. Device according to claim 1, **characterised in that** provided in each of the optical conductors (8a, 10a; 8b, 10b) is a shutter (11a, 11b), with which the beam paths in the optical conductors (8a, 10a; 8b, 10b) can be interrupted individually and independently of one another, so the wavelength-dependent intensity spectra of the light reflected by the substrate face (3a, 22a, 26a) and of the characteristic emission spectrum emitted by the light source (4, 6a) can be measured individually and separately from one another.

3. Device according to claim 1, **characterised in that** the light reflected into the Ulbricht sphere (6a) from a measuring face (3a, 22a, 26) of the object of-measurement (2a, 2b) is deflected onto the inlet gap (16) of the light-dispersive apparatus (14) by means of an optical display system (20) arranged diametrically opposing the discharge aperture (24), and **in that** the Ulbricht sphere (6a) has at least one further aperture (27) through which a portion of the light radiation generated in the interior of the Ulbricht sphere (6a) to determine the radiation function of the apparatus Φ_{ki, i = 1, 2,} ₃(λ) is deflected onto the inlet gap (16) of the light-dispersive apparatus (14).

4. Device according to claim 1, **characterised in that** a halogen lamp is provided as the lamp (4), which is preferably operated in the continuous lighting state.

5. Device according to claim 1, **characterised in that** a white reference standard, preferably a moulding made of barium sulphate or magnesium oxide or a plane body (26) made of ceramic material is provided as the reference face (26).

## Revendications

1. Dispositif pour mesurer les caractéristiques optiques d'objets réfléchissants avec transparence et/ou réfléchissants, en fonction de la longueur d'onde de la lumière, de préférence pour la mesure des caractéristiques optiques de couches minces (3a) déposées à l'aide d'un procédé de dépôt sous vide, comportant
1.1 une sphère d'Ulbricht (6a), dans laquelle une source de lumière (4) envoie un rayonnement, la sphère d'Ulbricht (6a) comportant
1.2 une première ouverture de sortie (24) située à l'opposé de l'objet de mesure (2a, 2b),
1.3 ainsi qu'une seconde ouverture de sortie (27), la seconde ouverture de sortie (27) étant reliée par l'intermédiaire d'un guide de lumière (8a, 10a) à un dispositif (14) réalisant une dispersion de la lumière,
1.4 comportant un élément d'injection (9), qui reçoit des rayons provenant de la sphère d'Ulbricht (6a) et les transmet au moyen d'un guide de lumière (8b, 10b) au dispositif (14) dispersif pour la lumière,
1.5 un dispositif de réception photosensible (15) situé dans le dispositif (14) qui est dispersif pour la lumière, et qui est relié à une unité d'évaluation (17) qui détermine et mémorise les caractéristiques optiques de l'objet de mesure,
**caractérisé en ce que** la seconde ouverture de sortie (27) pénètre à l'intérieur de la sphère d'Ulbricht (6a) et que la source de lumière (4) est orientée perpendiculairement à la première ouverture de sortie (24) et à la seconde ouverture de sortie (27).

2. Dispositif selon la revendication 1, **caractérisé en ce que** dans les guides de lumière (8a, 10a; 8b, 10b) est prévu respectivement un diaphragme (11a, 11b), au moyen duquel les trajets de rayonnement dans les guides de lumière (8a, 10a; 8b, 10b) peuvent être interrompus individuellement et indépendamment les uns des autres, ce qui a pour effet que les spectres d'intensité, qui dépendent de la longueur d'onde, de la lumière réfléchie par la surface (3a, 22a, 26a) du substrat et du spectre d'émission caractéristique émis par la source de lumière (4, 6a), peuvent être mesurés individuellement et séparément les uns des autres.

3. Dispositif selon la revendication 1, **caractérisé en ce que** la lumière, qui est réfléchie dans la sphère d'Ulbricht (6a) par une surface de mesure (3a, 22a, 26) de l'objet de mesure (2a, 2b), est déviée au moyen d'un système optique de formation d'images (20), disposé dans une position diamétralement opposée par rapport à l'ouverture de sortie (24), sur la fente d'entrée (16) du dispositif (14) dispersif pour la lumière et que la sphère d'Ulbricht (6a) comporte au moins une autre ouverture (25), au moyen de laquelle une partie du rayonnement lumineux produit à l'intérieur de la sphère d'Ulbricht (6a) est déviée vers la fente d'entrée (16) du dispositif (14) dispersif pour la lumière pour la détermination de la fonction de rayonnement de l'appareil Φ_{ki,i=1,2,3}^{(λ)}.

4. Dispositif selon la revendication 1, **caractérisé en ce qu'**il est prévu comme lampe (4) une lampe à halogène, qui fonctionne de préférence dans un état d'éclairement ininterrompu.

5. Dispositif selon la revendication 1, **caractérisé en ce qu'**il est prévu sur une surface de référence (26), un étalon blanc, de préférence une pièce pressée formée de sulfate de baryum ou d'oxyde de magnésium ou un corps plat (26) formé d'un matériau céramique.
